# EUROPEAN PATENT SPECIFICATION

(11) **EP 2 619 032 B1**
(45) Date of publication and mention of the grant of the patent: **14.05.2014**
(21) Application number: 11773518.3
(22) Date of filing: 19.09.2011
(51) Int. Cl.: B60N 2/50, B60N 2/54

(54) **SEAT SUSPENSION**
SITZFEDERUNG
SUSPENSION DE SIÈGE

(30) Priority: 20.09.2010 GB 201015726; 20.09.2010 US 384601 P
(43) Date of publication of application: 31.07.2013
(73) Proprietor: Kab Seating Limited, Round Spinney Northamptonshire NN3 8RS (GB)
(72) Inventor: BRITTON, Phillip John, Northamptonshire NN8 2NW (GB)
(74) Representative: Harris, David James
(86) International application number: PCT/GB2011/051752
(87) International publication number: WO 2012/038728

(56) References cited:
- WO-A1-03/082627
- DE-A1- 3 042 604

## Description

This application claims the benefit of US 20100384601P, filed on September 20, 2010.

This invention relates to a seat suspension for a vehicle seat.

It is known, and indeed required in many jurisdictions, to provide suspension for seats in such industrial vehicles as fork lift trucks, excavators and so on. The drivers of such vehicles come in a wide range of sizes, and the suspension of the seats must be able to cope with drivers throughout a range of weights.

One problem is that a particularly heavy or light driver may cause the suspension to hit the end of its travel as the suspension accommodates for shocks. One proposal to deal with this problem has been to change the preload on the spring of the suspension; that is, to change the compression of the spring for a given load, the spring rate being unchanged. This works to an extent, but still requires a large amount of travel to accommodate the range of driver weights expected.

It has been proposed to change the spring rate and the preload, in order to provide a stiffer effective spring rate (that is, greater force for a given movement of the seat) for heavier drivers. Such a system has been proposed in US- 4 471 934; however, such a system has still been unable to provide sufficient variation to cope with all expected driver weights in a compact package.

A suspention system according to the preamble of claim 1 is disclosed in DE-A 3042604.

According to a first aspect of the invention, there is provided a seat suspension for a vehicle seat, comprising a base, a seat support member, and a elongate member, the elongate member being pivotally connected at a first end to one of the base and the seat support member and in sliding contact at a second end with the other of the base and the seat support member, and carrying a ramp angled relative to and extending along the elongate member, one of the base and the seat support forming a support body, the seat suspension comprising a spring unit arranged to provide a spring force between the support body and the ramp, in which the spring unit comprises a resilient member held between the support body and a sliding member arranged for sliding motion along the ramp and relative to the support member and the resilient member, the sliding member being pivotally mounted to the support body, such that sliding the sliding member along the ramp changes both the compression of the resilient member and the effective spring rate of the suspension.

This mechanism therefore allows the spring rate of the suspension and the compression of the spring unit - that is, the preload - to be adjusted simultaneously in a single movement by moving the sliding member relative to the ramp. The elongate member acts as a lever, the pivot point or fulcrum (the first end) and the load (the second end) being fixed, the point along the elongate member at which the force is applied by the spring unit changing according to the position of the spring unit.

Additionally, as the sliding member slides along the ramp, the sliding member also acts as a lever, with the point where the force is applied by the resilient member relative to the fulcrum (the pivotal mounting of the sliding member on the support body) and the load (the point where the sliding member engages the ramp) changing. Thus, the two levers thus formed simultaneously change their mechanical advantage, and so will change the effective spring rate felt at the seat support member. The compression of the spring will change according to the angle of the ramp relative to the elongate member.

Typically, the resilient member will comprise a spring. By effective spring rate, we mean the rate at which the force applied by the seat support to a seat attached thereto changes with displacement of the seat support relative to the base. The compression of the spring unit will control how far through the suspension's travel the seat support will sit relative to the base for a given force.

The sliding member may be provided with a roller or other sliding engagement for sliding engagement with the ramp.

The seat suspension may comprise a further elongate member connected in parallel with the elongate member, having a ramp angled relative to the further elongate member and engaged by the spring unit. The seat suspension may also comprise at least one, but typically two, secondary elongate members pivotally connected to one of the seat support member and the base and in sliding contact with the other of the seat support member and the base. Each of the elongate member and the further elongate member may be pivotally connected to one of the secondary elongate members, typically at a point between the ends, ideally around the midpoint. The suspension may therefore define a scissor-type suspension.

The sliding contact of the or each elongate member may be a rolling connection; the end of the elongate member in sliding contact may comprise a roller by means of which the contact is achieved.

The resilient member may stay fixed relative to the support member as the sliding member moves relative to the ramp. This simplifies the location of the resilient member.

By varying the effective spring rate and compression in this manner, a single adjustment can allow users of vastly different weights to be seated in the suspension without reaching the end of the travel. Thus, the amount of travel in the suspension can be more efficiently used, allowing for a more compact suspension. In particular, by having two lever systems which contribute to the change in the effective spring rate simultaneously, a greater change in spring rate can be achieved from a mechanism of a given size. Indeed, in the preferred embodiment, the contribution to the change in spring rate due to the movement of the point along the ramp where the spring unit applies force to the ramp is the same sense as that due to the movement of the point where the resilient member engages the sliding member.

The suspension may further comprise a drive mechanism arranged to drive movement of the sliding member relative to the support body. The drive mechanism may comprise a threaded member, rotation of which relative to the sliding member causes the sliding member to move along the threaded member. The pivotal connection of the sliding member in the support member may be an elongate slot, engaged by a pin of the sliding member.

Typically, the support body will be the base, but the suspension could be implemented with the support member being the seat support member.

There now follows by way of example only an embodiment of the invention described with reference to the accompanying drawings, in which:
**Figure 1** shows a side elevation of a seat suspension according to an embodiment of the invention, with the adjustment of spring rate and preload at one extreme;
**Figure 2** shows a plan view of the seat suspension of Figure 1;
**Figure 3** shows a vertical cross-section along line A-A of Figure 2;
**Figure 4** shows a vertical cross-section along line B-B of Figure 2;
**Figure 5** shows a vertical cross-section along line C-C of Figure 2; and
**Figures 6 to 10** show the corresponding views to Figures 1 to 5 respectively, with the adjustment of spring rate and preload at the other extreme.

A seat suspension for use in a vehicle such as a small fork lift truck or mini-excavator, where a compact size is required, and according to an embodiment is shown in the accompanying drawings.

The suspension comprises a base 1, which would be attached to the floor of the vehicle and a seat support member 2, which would be attached to the driver's seat (not shown). The seat support member is supported on four elongate members 3, 4, 5, 6, which together form a scissor suspension. The first 3 and second 4 elongate members are parallel to each other, with the third 5 and fourth 6 elongate members being parallel to each other so as to form two pairs of mutually parallel elongate members.

The first 3 and second 4 elongate members are pivotally connected to the base 1 at first ends 7 thereof, and are provided with rollers 8 at the opposite second ends thereof, in contact with the seat support member 2. In the same manner, the third 5 and fourth 6 members are pivotally connected to the seat support member at first ends 9 thereof, and are provided with rollers (not shown) by means of which they are in sliding contact with the base 1. The first 3 and third 5 members are joined pivotally together close to their midpoint at point 10a; similarly, the second 4 and fourth 6 members are joined pivotally together close to their midpoint at point 10b. One set of thus-joined members is provided on each lateral side of the suspension.

The first 3 and second 4 elongate members each have a ramp 13 extending from them generally along their length, but at an angle relative to the length in the plane in which the members can pivot relative to the base 1.

The resilient force require to support the driver of the vehicle is provided by a spring unit 11. This comprises two resilient members of the form of helical springs 12 supported by base 1. The springs 12 are capped by a sliding member 14. The sliding member is provided with two rollers 15, one on each lateral side thereof. These rollers 15 engage the underside of the ramp 13, and transmit the spring force from the springs 12 to the ramp 13 and so the relevant elongate members 3, 4.

The sliding member 14 is pivotally mounted in a lateral pair of elongate slots 16 in the base 1 by means of a pin 17 passing through the sliding member 14. The sliding member 14 can be slid backwards and forwards in the slot 16. This causes the sliding member to slide relative to the springs 12, and causes the rollers 15 to roll along the underside of the ramps 13.

The sliding member 14 is driven backwards and forwards by means of a drive mechanism 18. This comprises a threaded member 19, which engages a threaded orifice 20 in a stirrup member 21 coupled to pin 17 and thus sliding member 14. The threaded member 19 can rotate, but not move linearly relative to the base. This means, as the threaded member 19 rotates, the stirrup member 21 will pull or push sliding member 14 along the threaded member 19.

As such, there are effectively two lever motions connecting the springs 12 to the seat support member 1. The first is the sliding member 14, pivoting about pin 17, with the springs 12 applying their force where they engage the sliding member 14, the sliding member applying force on the ramps 13 and so the relevant elongate members 3, 4. The second is the first 3 and second 4 elongate members, which pivot about their first ends 7, have force applied where the rollers 15 engage the ramps 13 and exert force on the seat support at the second ends 8.

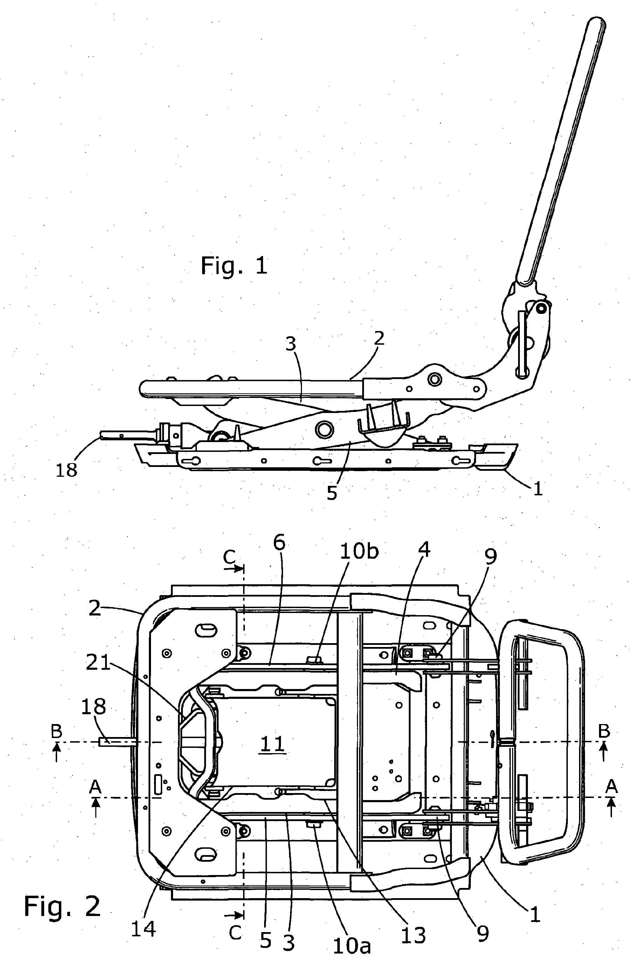

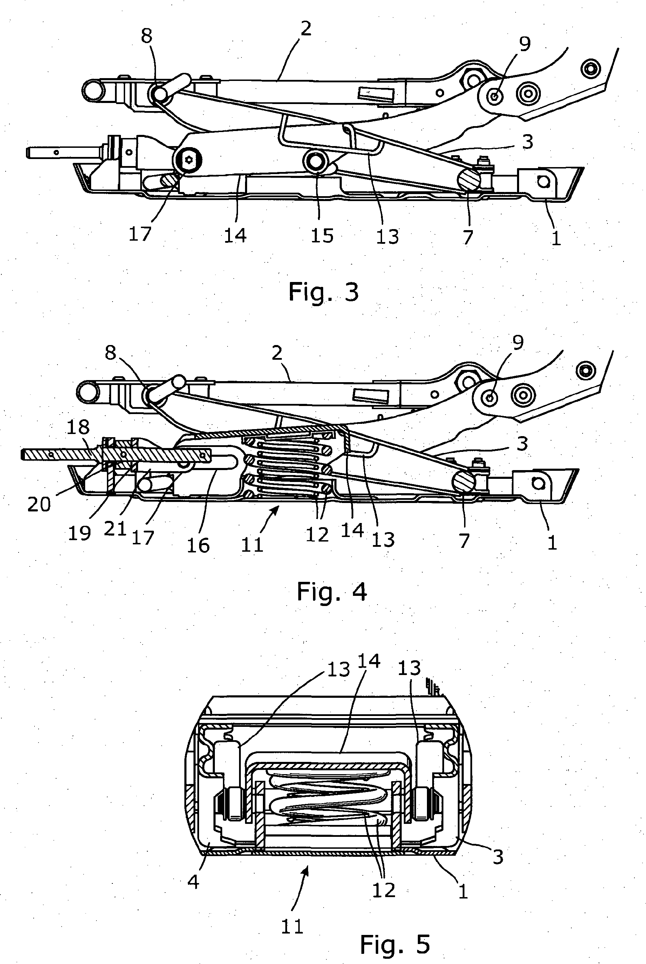

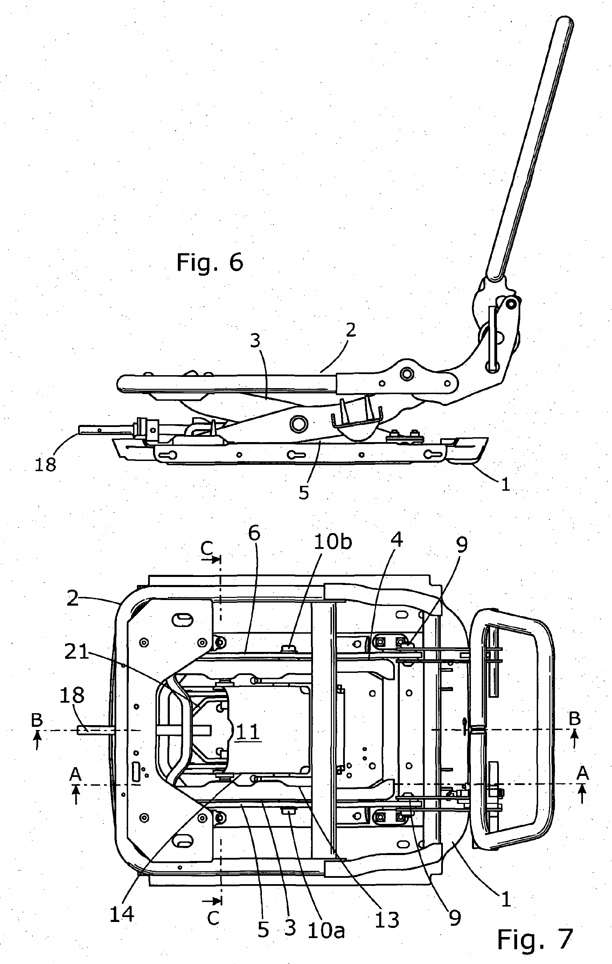

The action of the sliding member has several effects. Firstly, the point on the sliding member 14 where the springs 12 engage the sliding member moves, thus changing the mechanical advantage of the first lever system. The mechanical advantage of the first lever system will therefore decrease as the sliding member 14 moves to the right in Figures 3 and 4 (that is, from the position in Figures 1 to 5 to that of Figures 6 to 10).

The action of moving the sliding member 14 also has the effect of moving the point where the rollers 15 engage the ramps 13, thus changing the mechanical advantage of the second lever system. The mechanical advantage of the second lever system will therefore decrease as the sliding member 14 moves to the right in Figures 3 and 4 (that is, from the position in Figures 1 to 5 to that of Figures 6 to 10).

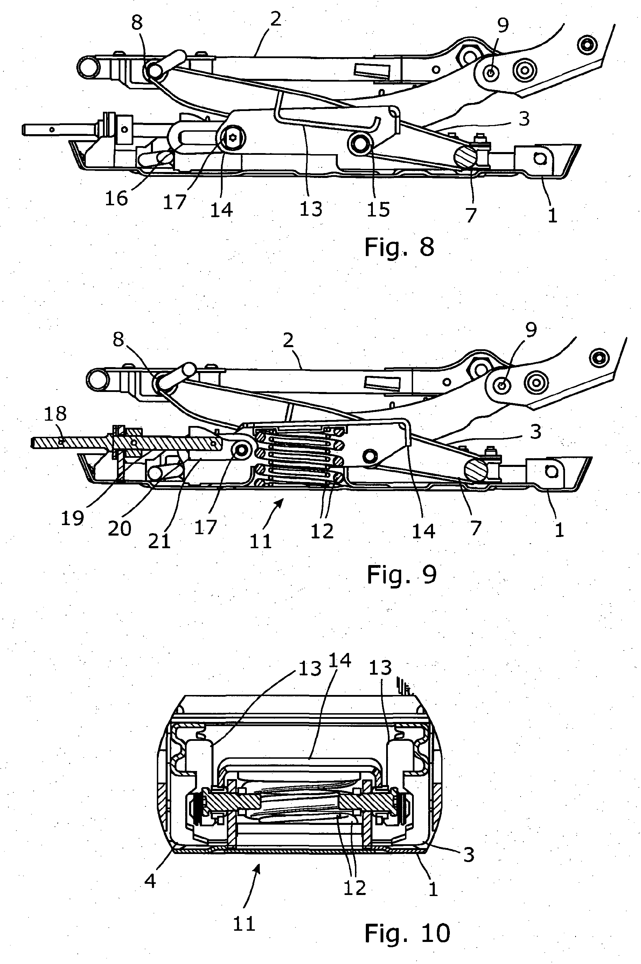

It can therefore be seen that moving the sliding member 14 causes the mechanical advantage of both lever systems to change in the same sense, in that moving the sliding member 14 to the right in Figures 3 and 4 towards the position shown in Figures 6 to 10 will decrease the overall mechanical advantage of the suspension. This will therefore decrease the effective spring rate felt at the seat support member 2. Conversely, moving the sliding member to the left in Figures 8 and 9, towards the position of Figures 1 to 5, will increase the overall mechanical advantage of the suspension, increasing the effective spring rate felt at the seat support member 2.

Moving the sliding member 14 also has the effect of changing the compression of the springs 12, because of the angle of the ramps 13. As can be seen particularly in Figures 3 and 8, as the sliding member 14 is moved to the right (towards Figure 8), the angle of the ramp will tend to compress the springs 12. This means that the preload will be increased as the effective spring rate is decreased, and vice versa.

As such, a lighter driver will want a lower effective spring rate, but will need a higher preload to ensure that, with their weight applied on the seat support member 2, the equilibrium position for the seat support member 2 is roughly halfway through the travel of the seat support member 2 relative to the base. Similarly, a heavier driver will want a higher, stiffer, effective spring rate, but will need less preload of the spring to ensure that the equilibrium position is in the same position as for the lighter driver.

Thus, the present system can compensate for drivers having masses between 50 and 140 kg with a consistent travel of around 80mm. The effective spring rate at the seat support member 2 will vary between around 3 to 15 N/mm.

## Claims

1. A seat suspension for a vehicle seat, comprising a base (1), a seat support member (2), and a elongate member (3,4), the elongate member (3,4) being pivotally connected at a first end (7) to one of the base (1) and the seat support member (2) and in sliding contact at a second end (8) with the other of the base (1) and the seat support member (2), and carrying a ramp (13) angled relative to and extending along the elongate member (3,4), one of the base (1) and the seat support (2) forming a support body, the seat suspension comprising a spring unit (11) arranged to provide a spring force between the support body (1,2) and the ramp (13), in which the spring unit (11) comprises a resilient member (12) held between the support body (1,2) and **characterised by** further comprising a sliding member (14) arranged for sliding motion along the ramp (13) and relative to the support member (1,2) and the resilient member (12), the sliding member (14) being pivotally mounted to the support body (1,2), such that sliding the sliding member (14) along the ramp (13) changes both the compression of the resilient member (12) and the effective spring rate of the suspension.

2. The suspension of claim 1, in which the elongate member (3,4) acts as a lever, the point along the elongate member (3,4) at which the force is applied by the spring unit (11) changing according to the position of the spring unit (11); and the sliding member (14) also acts as a lever, with the point where the force is applied by the resilient member (12) relative to the pivotal mounting of the sliding member (14) on the support body (1,2) changing, the two levers simultaneously changing their mechanical advantage in the same sense as the sliding member (14) slides along the ramp (13).

3. The suspension of claim 1 or claim 2, in which the sliding member (14) is provided with a roller (15) or other sliding engagement for sliding engagement with the ramp (13).

4. The suspension of any preceding claim, comprising a further elongate member (4) connected in parallel with the elongate member (3), having a ramp (13) angled relative to the further elongate member (4) and engaged by the spring unit (11) and at least one, but typically two, secondary elongate members (5,6) pivotally connected to one of the seat support member (2) and the base (1) and in sliding contact with the other of the seat support member (2) and the base (1), each of the elongate member (3) and the further elongate member (4) being pivotally connected to one of the secondary elongate members (5,6).

5. The suspension of any preceding claim, in which the resilient member (12) stays fixed relative to the support member (12) as the sliding member (14) moves relative to the ramp (13).

6. The suspension of any preceding claim, in which the suspension further comprises a drive mechanism (18) arranged to drive movement of the sliding member (14) relative to the support body (1,2).

7. The suspension of any preceding claim, in which the support body is the base (1).

## Patentansprüche

1. Eine Sitzfederung für ein Fahrzeug bestehend aus einem Unterbau (1), einer Sitzstütze (2) und einem länglichen Element (3, 4), wobei das längliche Element (3,4) schwenkbar an einem ersten Ende (7) entweder mit dem Unterbau (1) oder der Sitzstütze (2) verbunden ist und an einem zweiten Ende (8) mit dem anderen der beiden, d.h. entweder mit dem Unterbau (1) oder mit der Sitzstütze (2) in Gleitkontakt ist und eine Rampe (13) trägt, die relativ zum längliches Element (3,4) gewinkelt ist und entlang diesem verläuft, wobei entweder der Unterbau (1) oder die Sitzstütze (2) eine Stütze bilden, wobei sich die Sitzfederung aus einer Federeinheit (11) zusammensetzt, die so angeordnet ist, dass sie zwischen der Stütze (1, 2) und der Rampe (13) eine Federkraft erzeugt, wobei die Federeinheit (11) ein elastisches Element (12) aufweist, dass zwischen der Stütze (1, 2) gehalten wird, und **dadurch gekennzeichnet, dass** sie zudem ein Gleitelement (14) aufweist, das so angeordnet ist, dass es entlang der Rampe (13) und relativ zur Stütze (1 ,2) und dem elastischen Element (12) gleitet, wobei das Gleitelement (14) schwenkbar mit der Stütze (1, 2) verbunden ist, so dass beim Gleiten des Gleitelements (14) entlang der Rampe (13) sowohl das Zusammenpressen des elastischen Elements (12) als auch die effektive Federkonstante der Federung geändert wird.

2. Die Sitzfederung entsprechend Anspruch 1, bei der das längliche Element (3, 4) als Hebel fungiert, wobei sich die Stelle entlang dem länglichen Element (3, 4), an welcher von der Federeinheit (11) die Kraft angewendet wird, entsprechend der Position der Federeinheit (11) ändert; und wobei das Gleitelement (14) ebenfalls als Hebel fungiert, wobei sich die Stelle, an der vom elastischen Element (12) relativ zur schwenkbaren Befestigung des Gleitelements (14) an der Stütze (1, 2) Kraft angewendet wird, ändert, wobei die beiden Hebel ihren mechanischen Vorteil gleichzeitig in der selben Richtung ändern, wenn das Gleitelement (14) an der Rampe (13) entlang gleitet.

3. Die Sitzfederung entsprechend Anspruch 1 oder Anspruch 2, bei der das Gleitelement (14) mit einer Laufrolle (15) oder anderem Gleiteinsatz zum gleitenden Einrasten mit der Rampe (13) versehen ist.

4. Die Sitzfederung entsprechend einem der vorhergehenden Ansprüche, die ein weiteres längliches Element (4) aufweist, das parallel mit dem länglichen Element (3) verbunden ist und eine Rampe (13) aufweist, die relativ zum weiteren länglichen Element (4) gewinkelt ist und von der Federeinheit (11) und zumindest einem, jedoch typisch zwei, sekundären länglichen Elementen (5, 6) aufgenommen wird, die schwenkbar mit entweder der Sitzstütze (2) oder dem Unterbau (1) verbunden sind und mit dem anderen der beiden, d.h. entweder mit der Sitzstütze (2) oder dem Unterbau (1), in Gleitkontakt sind, wobei das längliche Element (3) und das zusätzliche längliche Element (4) jeweils schwenkbar mit einem der sekundären länglichen Elemente (5, 6) verbunden sind.

5. Die Sitzfederung entsprechend einem der vorhergehenden Ansprüche, bei der das elastische Element (12) relativ zum Stützelement (12) unbeweglich bleibt, während das Gleitelement (14) sich relativ zur Rampe (13) bewegt.

6. Die Sitzfederung entsprechend einem der vorhergehenden Ansprüche, bei der die Federung weiterhin einen Antriebsmechanismus (18) aufweist, der so angeordnet ist, dass er die Bewegung des Gleitelements (14) relativ zur Stützeinheit (1, 2) antreibt.

7. Die Sitzfederung entsprechend einem der vorhergehenden Ansprüche, bei der die Stützeinheit der Unterbau (1) ist.

## Revendications

1. Suspension de siège pour un siège de véhicule, comprenant une base (1), un élément de support de siège (2), et un élément allongé (3, 4), l'élément allongé (3, 4) étant relié de façon pivotante à une première extrémité (7) à l'un de la base (1) et de l'élément de support de siège (2) et en contact glissant à une seconde extrémité (8) avec l'autre de la base (1) et l'élément de support de siège (2), et portant une rampe (13) inclinée par rapport à l'élément allongé et s'étendant le long de l'élément allongé (3, 4), l'un de la base (1) et du support de siège (2) formant un corps de support, la suspension de siège comprenant une unité de ressort (11) agencée de manière à fournir une tension du ressort entre le corps de support (1, 2) et la rampe (13), dans laquelle l'unité de ressort (11) comprend un élément élastique (12) maintenu entre le corps de support (1,2), et **caractérisé en ce qu'**il comprend en outre un élément coulissant (14) agencé pour un mouvement coulissant le long de la rampe (13) et par rapport à l'élément de support (1, 2) et l'élément élastique (12), l'élément coulissant (14) étant monté de manière pivotante sur le corps de support (1, 2), de sorte que le coulissement de l'élément coulissant (14) le long de la rampe (13) modifie à la fois la compression de l'élément élastique (12) et la constante de rappel effective de la suspension.

2. Suspension selon la revendication 1, dans laquelle l'élément allongé (3,4) agit comme un levier, le point le long de l'élément allongé (3, 4) auquel la force est appliquée par l'unité de ressort (11) changeant en fonction de la position de l'unité de ressort (11) ; et l'élément coulissant (14) agit également comme un levier, à l'endroit où la force est appliquée par l'élément élastique (12) par rapport au montage pivotant de l'élément coulissant (14) sur le corps de support (1, 2) changeant, les deux leviers changeant simultanément leur effet mécanique dans le même sens que l'élément coulissant (14) coulisse le long de la rampe (13).

3. Suspension selon la revendication 1 ou la revendication 2, dans lequel l'élément coulissant (14) est pourvu d'un galet (15) ou autre prise coulissante pour un engagement coulissant avec la rampe (13).

4. Suspension selon l'une quelconque des revendications précédentes, comprenant un élément allongé supplémentaire (4) connecté en parallèle avec l'élément allongé (3), comportant une rampe (13) inclinée par rapport à l'autre élément allongé (4) et en prise par l'unité de ressort (11) et au moins un, mais en règle générale deux, des éléments allongés secondaires (5, 6) reliés de manière pivotante à l'un de l'élément de support de siège (2) et de la base (1) et en contact glissant avec l'autre de l'élément de support de siège (2) et la base (1), chacun de l'élément allongé (3) et de l'autre élément allongé (4) étant relié de façon pivotante à l'un des éléments allongés secondaires (5, 6).

5. Suspension selon l'une quelconque des revendications précédentes, dans laquelle l'élément élastique (12) reste fixe par rapport à l'élément de support (12) lorsque l'élément coulissant (14) se déplace par rapport à la rampe (13).

6. Suspension selon l'une quelconque des revendications précédentes, dans laquelle la suspension comprend en outre un mécanisme d'entraînement (18) agencé pour entraîner le mouvement de l'élément coulissant (14) par rapport au corps de support (1, 2).

7. Suspension selon l'une quelconque des revendications précédentes, dans laquelle le corps de support est une base (1).
